# EUROPEAN PATENT APPLICATION

(11) **EP 1 719 901 A1**
(43) Date of publication of application: **08.11.2006**
(21) Application number: 05710093.5
(22) Date of filing: 10.02.2005
(51) Int. Cl.: F02F 3/00, F02F 5/00, F16J 9/00

(54) **PISTON DEVICE FOR INTERNAL COMBUSTION ENGINE**

(30) Priority: 12.02.2004 JP 2004035357
(71) Applicant: Kabushiki Kaisha Riken, Chiyoda-ku, Tokyo 102-8202 (JP)
(72) Inventor: YAMADA, Takeshi, c/o KABUSHIKI KAISHA RIKEN, Kashiwazaki-shi, Niigata 945-8555 (JP); YOSHIDA, Hideki, c/o KABUSHIKI KAISHA RIKEN, Kashiwazaki-shi, Niigata 945-8555 (JP); IIJIMA, Naoki, c/o KABUSHIKI KAISHA RIKEN, Kashiwazaki-shi, Niigata 945-8555 (JP)
(74) Representative: Zeitler - Volpert - Kandlbinder
(86) International application number: PCT/JP2005/002041
(87) International publication number: WO 2005/078268

(57) **Abstract**

A top ring is designed to have a gas seal function and an oil control function in order to realize approximately the same amount of oil consumption and brow-by gas as those realized by three rings, by using the top ring only. A piston assembly includes a piston body and a piston ring having a U-shaped cross section. The piston body has a top land portion and a ring groove formed on its periphery. The piston ring includes an upper leg portion, a lower leg portion, and a base portion connecting the upper and lower leg portions, and is attached to the top land portion of the piston body. An axial length from a boundary of the base portion of the piston ring and the upper leg portion to a lower surface of the lower leg portion is set to be larger than an axial length from an upper surface of the top land portion of the piston body to a lower surface of the ring groove to which the lower leg portion is fitted. Alternatively, axial grooves are provided on a thrust side of the top land portion. Alternatively, a V-shaped annular groove is provided in a second land portion of the piston body. The piston ring may include an upper periphery having a BF (barrel face) shape and a lower periphery formed as a straight or tapered contact face.

## Description

### THECHNICAL FIELD

The present invention relates to a shape of a piston in an internal-combustion engine in which the piston is reciprocated, and a shape of a piston ring.

### BACKGROUND ART

In an internal-combustion engine in which a piston is reciprocated, a set of three rings is usually used for each cylinder, which includes two compression rings and one oil ring.
Those three rings share a gas seal function and an oil control function. That is, the top ring and the second ring carry out the gas seal function, and the second ring and the oil ring carry out the oil control function. In this manner, required functions of a piston ring are carried out by a set of three rings.

In recent years, the internal-combustion engines have problems of increase of engine revolutions, increase of an engine output, and reduction of friction. Those problems can be effectively solved by reducing the number of the rings.
Therefore, a piston assembly using a single piston ring is conventionally proposed (see Patent document 1, for example). A piston assembly for internal-combustion engine is also known in which a compression piston ring having a square U-shaped cross section is fitted to a top land portion of a piston body in order to improve a seal function and the like (see Patent document 2).
Patent document 1: Japanese Utility-Model Application Publication No. 58-24558
Patent document 2: Japanese Utility-Model Application Publication No. 5-42661

### DISCLOSURE OF INVENTION

### Problems to be solved by the invention

However, in a case of a single piston ring as described in Patent document 1, it is not possible to sufficiently carry out both the functions of gas seal and oil control.
In addition, the piston assembly described in Patent document 2 is designed in such a manner that a crown face of the piston body firmly comes into contact with an upper leg portion of the compression piston ring having a square U-shaped cross section when a compression pressure acts. Thus, entrance of compressed gas into back clearance is prevented, and the piston ring cannot sufficiently conform to the cylinder. Therefore, the gas seal function and the oil control function cannot be carried out sufficiently.

The present invention was made in order to overcome the aforementioned problems of the conventional piston assemblies. It is an object of the present invention to provide a piston assembly for internal-combustion engine, which includes a TOP-ring that can have superb functions of gas seal and oil control.

### Means to Solve the Problem

According to the present invention, a piston assembly for internal-combustion engine includes: a piston body including a top land portion and a ring groove formed on its periphery; and a piston ring having a U-shaped (or square U-shaped) cross section. The piston ring includes an upper leg portion, a lower leg portion, and a base portion connecting the upper and lower leg portions. The piston ring is attached to the top land portion of the piston body. An axial length from a boundary of the base portion of the piston ring and the upper leg portion to a lower surface of the lower leg portion is set to be larger than an axial length from an upper surface of the top land portion of the piston body to a lower surface of the ring groove into which the lower leg portion of the piston ring is fitted.

According to the present invention, a piston assembly for internal-combustion engine includes: a piston body including a top land portion and a ring groove formed on its periphery; and a piston ring having a U-shaped (or square U-shaped) cross section. The piston ring includes an upper leg portion, a lower leg portion, and a base portion connecting the upper and lower leg portions. The piston ring is attached to the top land portion of the piston body. At least one axial (or vertical) groove is provided on a thrust side of the top land portion of the piston body.
In addition, according to the present invention, a piston assembly for internal-combustion engine includes: a piston body including a top land portion and a ring groove formed on its periphery; and a piston ring having a U-shaped (or square U-shaped) cross section. The piston ring includes an upper leg portion, a lower leg portion, and a base portion connecting the upper and lower leg portions. The piston ring is attached to the top land portion of the piston body. The piston body further includes a second land portion in which a V-shaped annular groove is formed.

According to a fourth aspect of the invention as set forth in claim 4, the piston ring in the piston assembly for internal-combustion engine according to any one of the first to third aspects has an upper periphery of a BF (barrel face) shape and a lower periphery formed as a straight or tapered contact face.

### Effect of the invention

According to the present invention, a single piston ring can have superb functions of gas seal and oil control. Thus, the number of piston rings can be reduced. Thereby, the increase of engine revolutions of an internal-combustion engine, the increase of the engine output, and the reduction of friction can be also achieved.
In addition, according to the present invention, it is possible to actively allow the heat in an upper part of the piston to escape toward a cylinder, thus improving the wear resistance of the ring groove of the piston body.

### BRIEF DESCRIPTION OF THE DRAWINGS

Fig. 1 is a perspective view of a piston assembly 1 for an internal-combustion engine according to an embodiment of the present invention;
Fig. 2 is an enlarged view of a main part in Fig. 1;
Fig. 3 is a schematic top plan view of an engine to which the piston assembly 1 shown in Fig. 1 is applied;
Fig. 4 is a graph showing results of comparison of the piston assembly 1 shown in Fig. 1 with a conventional piston assembly with respect to the amount of oil consumption;
Fig. 5 is an enlarged view of a main part of a piston assembly 1A for internal-combustion engine according to another embodiment of the present invention;
Fig. 6 is an enlarged view of a main part of a piston assembly 1B for internal-combustion engine according to another embodiment of the present invention; and
Fig. 7 is an enlarged view of a main part of a piston assembly 1C for internal-combustion engine according to another embodiment of the present invention.

### BEST MODE FOR CARRYING OUT THE INVENTION

The invention will now be described based on the preferred embodiments shown in the drawings.

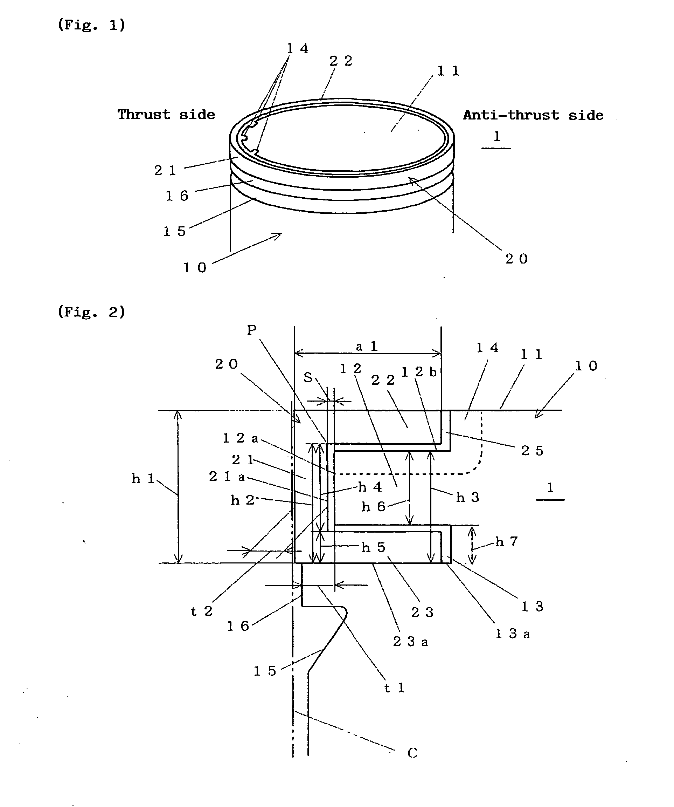

Figs. 1 to 3 show a piston assembly 1 for an internal-combustion engine according to an embodiment of the present invention (which corresponds to claims 1 to 3).
The piston assembly 1 of the present embodiment includes a piston body 10 and a piston ring 20. The piston body 10 has a top land portion 12 and a ring groove 13 formed on its periphery. The piston ring 20 is attached to the top land portion 12 of the piston body 10. The piston ring 20 has a U-shaped cross section and includes an upper leg portion 22, a lower leg portion 23, and a base portion 21 connecting the upper and lower leg portions 22 and 23. An axial length h2 from a boundary P of the base portion 21 of the piston ring 20 and the upper leg portion 22 to a lower surface 23a of the lower leg portion 23 is set to be larger than an axial length h3 from an upper surface 12b of the top land portion 12 to a lower surface 13a of the ring groove 13 to which the lower leg portion 23 of the piston ring 20 is attached. In other words, the sum of an axial length h4 of the base portion 21 of the piston ring 20 and an axial length h5 of the lower leg portion 23 is set to be larger than the sum of an axial length h6 of the top land portion 12 of the piston body 10 and an axial length h7 of the ring groove 13. When a compression pressure acts in this arrangement, the lower surface 23a of the lower leg portion 23 of the piston ring 20 firmly comes into contact with the lower surface 13a of the ring groove 13 and clearance is generated around the entire internal surface of the piston ring 20 having a U-shaped cross section. Entering of compressed gas into this clearance pushes the piston ring 20 and the piston ring 20 conforms to the cylinder, thereby improving the sealing property. A value of h2 - h3 is preferably 40 ± 20 µm in a case of a gasoline engine and 100 ± 20 µm in a case of a diesel engine. It is preferable to set tolerance to fall within the above range.

Figs. 1 and 2 show the arrangement in which a notch 25 is formed in a crown face 11 of the piston body 10 and the upper leg portion 22 of the piston ring 20 is fitted into the notch 25. However, the present invention is not limited to this arrangement. For example, the present invention can be also applied to an arrangement in which the piston body 10 does not have the notch 25 and the upper leg portion 22 of the piston ring 20 is attached to project upward from the crown face 11 of the piston body 10. In this case, the same effects can be achieved by setting the axial length h2 from the boundary P of the base portion 21 of the piston ring 20 and the upper leg portion 22 to the lower surface 23a of the lower leg portion 23 to be larger than the axial length h3 from the upper surface (i.e., the crown face 11 in this case) of the top land portion 12 to the lower surface 13a of the ring groove 13 to which the lower leg portion 23 is attached.

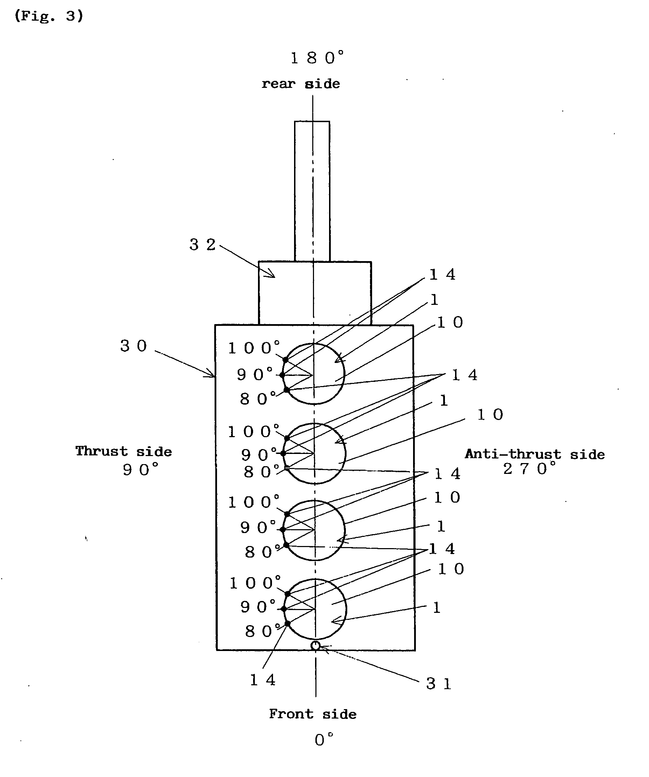

It is preferable that axial grooves 14 be provided on a thrust side of the top land portion 12 of the piston body 10. In the example of Fig. 3, the axial grooves 14 are arranged on the thrust side at positions of 80-degree, 90-degree, and 100-degree from a front position 31 of an engine 30. The axial grooves 14 are formed to extend from the crown face 11 of the piston body 10 to the periphery 12a of the top land portion 12 along the upper side of the top land portion 12. The engine 30 communicates with a transmission 32, as shown in Fig. 3. The leading-end side of the engine 30 is called as a front side, and the rear-end side is called as a rear side. The positions of the axial grooves 14 are not limited, as long as they are arranged on the thrust side (in a range from 0 to 180-degree from the front position 31). It is preferable that the axial grooves 14 be arranged in a range from 45 to 135-degree.

The formation of those axial grooves can increase a pressure on the back of the piston ring 20, thus improving the oil control function and the seal function. This arrangement can be applied not only to the aforementioned piston assembly in which the lower surface 23a of the lower leg portion 23 of the piston ring 20 having a U-shaped cross section firmly comes into contact with the lower surface 13a of the ring groove 13 of the piston body 10 when a compression pressure acts, but also to a piston assembly in which the crown face (or upper surface of the top land) of the piston body firmly comes into contact with the upper leg portion of the piston ring having a U-shaped cross section when a compression pressure acts, like the conventional piston assembly. This arrangement can achieve excellent effects in both the piston assemblies.

It is preferable to form a V-shaped annular groove 15 in a second land portion 16 of the piston body 10. The annular groove 15 can ease up the increase of the oil pressure on the second land portion 16. Thus, leak of oil into a combustion chamber through the top land portion 12, which increases oil consumption, can be prevented. Please note that the upper surface of the V-shaped groove described here is horizontal or inclined in such a manner that its inner circumferential portion is elevated. In addition, the V-shaped groove described here has a radial width that becomes smaller downward in its lower part. It is preferable that an angle of the lower surface of the V-shaped groove with respect to the piston axis be in a range of 15 to 45-degree. The annular groove 15 may have a square U-shaped, a U-shaped, or a reversed V-shaped cross section, instead of the aforementioned V-shape. However, in a case of the V-shape annular groove 15, it is easy to collect oil into the annular groove and therefore a beneficial effect of reducing oil consumption can be achieved.

That V-shaped annular groove can be applied not only to the aforementioned piston assembly in which the lower surface 23a of the lower leg portion 23 of the piston ring 20 having a U-shaped cross section firmly comes into contact with the lower surface 13a of the ring groove 13 when a compression pressure acts, but also to a piston assembly in which the crown face (or upper surface of the top land) of the piston body firmly comes into contact with the upper leg portion of the piston ring having a U-shaped cross section when a compression pressure acts, like the conventional piston assembly. In both the piston assemblies, the V-shaped annular groove can achieve excellent effects.

During an expansion stroke, the piston body 10 moves down on the thrust side. In order to effectively scrape oil from the second land portion 16 by using a side pressure of the piston body 10 during the expansion stroke, it is preferable that t1 (the distance between the top land portion 12 and the second land portion 16) be approximately equal to t2 (the thickness of the piston ring) in Fig. 2. It is also preferable to set a value of t1 - t2 to 0 to 50 µm.

An operation of the piston assembly 1 for internal-combustion engine according to the present embodiment, that has the aforementioned arrangement, is now described.
In the present embodiment, the piston ring 20 having a U-shaped cross section is attached to the piston body 10 in such a manner that the lower surface 23a of the lower leg portion 23 can slide on the lower surface 13a of the ring groove 13. Thus, when a compression pressure acts on the piston body 10, the lower surface 23a of the lower leg portion 23 of the piston ring 20 slides on the lower surface 13a of the ring groove 13 so as to stretch the piston ring 20 outward. As a result, a space S is formed between the inner circumferential surface 21 a of the base portion 21 of the piston ring 20 and the periphery 12a of the top land portion 12. A space is formed between the entire inner circumferential surface of the piston ring 20 and the piston body 10. The space S has a labyrinth effect, and makes it difficult to transfer oil that moves from the second land portion 16 to the back of the piston ring 20 via the lower side face of the piston ring 20, to the combustion chamber. Therefore, the effect of reducing oil consumption can be achieved.

Even in a case of using a low-tension piston ring, the piston ring 20 is conformed to the cylinder C when a gas pressure acts. Thus, the piston ring 20 can carry out the gas seal function.
In the present embodiment, the axial grooves 14 for increasing the backpressure on the piston ring 20 are provided on the thrust side of the top land portion 12 of the piston body 10. The axial grooves 14 are arranged at positions of 80-degree, 90-degree, and 100-degree from the front position 31 of the engine 30. Therefore, during an expansion stroke on the thrust side where the oil film thickness while the engine actually works is thick, the back pressure on the piston ring 20 on the thrust side is increased via the grooves 14 with the increase of the pressure in the cylinder (combustion pressure), thus effectively reducing the oil film thickness. In this manner, the excellent oil control function can be carried out.

In the present embodiment, the piston ring 20 is attached to the top land portion 12 that is located at an upper end of the piston body 10. Thus, the temperature at the crown face 11 and the top land portion 12 of the piston body 10 can be reduced.
Experiments of the piston assembly 1 for an internal-combustion engine according to the present embodiment were conducted while comparing the piston assembly with a conventional single-ring.

A naturally-aspirated 1.8-liter gasoline engine having a bore of 79 mm was used in the experiments.
The piston ring 20 used in the experiments had a U-shaped cross section and were made of steel. The dimension of t2 was 0.5 mm. The dimension of h1 was 2.0 mm and the dimension of a1 was 2.0 mm.
The following three piston bodies were manufactured. The above piston ring 20 was attached to each of those piston bodies so as to obtain piston assemblies of Examples 1, 2 and 3.

1) The piston assembly of Example 1 included a piston body having the following arrangement. A notch into which the upper leg portion of the piston ring having a U-shaped cross section was fitted was formed in the crown face of the piston body. A ring groove into which the lower leg portion of the piston ring was fitted was provided below the crown face. The dimensions of the notch and the ring groove in the axial direction were set to be larger than the dimensions of the upper leg portion and the lower leg portion of the piston ring in the axial direction by about 50 µm, respectively. The dimensions of the notch and the ring groove in the radial direction were set to be larger than the dimension a1 of the piston ring by about 50 µm.

2) The piston assembly of Example 2 included a piston body having the following arrangement. Three axial grooves were provided on the thrust side of the piston body 10 of the piston assembly of Example 1. The three axial grooves were arranged at positions of 80-degree, 90-degree, and 100-degree from the front position. Each axial groove extended from the crown face to the periphery of the top land portion and had a width of 3 mm and a depth of 5 mm.
3) The piston assembly of Example 3 included a piston body having the following arrangement. Three axial grooves were provided on the thrust side of the piston body of the piston assembly of Example 1 in a similar manner to those of Example 2. In addition, a V-shaped annular groove was formed in the second land portion of the piston body.

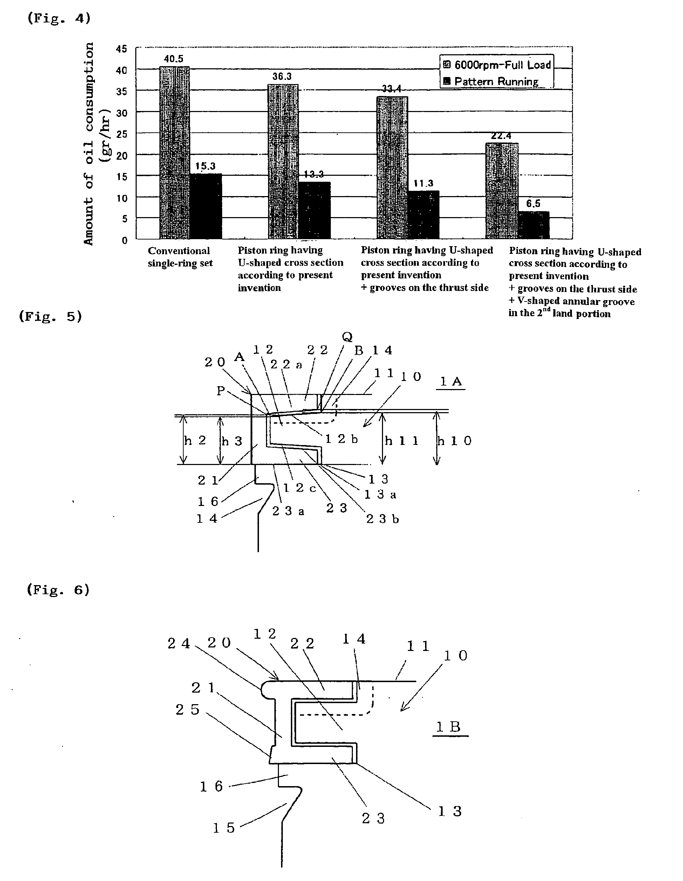

Moreover, the amount of oil consumption and blow-by gas were measured in a piston with a single compression ring. The result of this measurement is shown as a conventional single-ring set in Fig. 4. This piston had no V-shaped annular groove in the second land portion of the piston body.
As shown in Fig. 4, it was confirmed that the amount of oil consumption was reduced in the piston assembly of Example 1 that employed the piston ring having a U-shaped cross section according to the present invention, as compared with the conventional single-ring set. Here, the amount of blow-by gas was also reduced in the piston assembly of Example 1 as compared with the conventional single-ring set. The amount of oil consumption was further reduced by providing the grooves on the thrust side of the piston body. The amount of oil consumption was significantly reduced by further providing the V-shaped annular groove on the piston body (Example 3). The amount of blow-by gas was reduced from 14.0 L/min in the conventional single-ring set to 12.2 L/min in the piston assembly of Example 3.

Fig. 5 shows a piston assembly 1A for internal-combustion engine according to another embodiment of the present invention.
The piston assembly 1A of the present embodiment is different from the piston assembly 1 of the above embodiment in the following points. Upper and lower surfaces 12b, 12c of the top land portion 12 are tapered. That is, the top land portion 12 is formed to have a reversed keystone shape. A lower surface 22a of the upper leg portion of the piston ring 20 having a U-shaped cross section and an upper surface 23b of the lower leg portion are tapered in such a manner that the width of each leg portion in the axial direction becomes larger toward the periphery of the piston assembly.

The piston assembly 1A of the present embodiment is advantageous in that carbons interposed between the piston ring 20 and the top land portion 12 can be easily discharged.
In this case, it is preferable that the axial length h2 from the boundary P of the base portion 21 of the piston ring 20 and the upper leg portion 22 to the lower surface 23a of the lower leg portion be set to be larger than the axial length h3 from an periphery upper end A of the top land portion 12 to the lower surface 13a of the ring groove 13 into which the lower leg portion of the piston ring is fitted. Moreover, it is preferable that an axial length h10 from an inner circumferential lower end Q of the upper leg portion of the piston ring 20 to the lower surface 23a of the lower leg portion be set to be larger than an axial length h11 from an inner circumferential upper end B of the top land portion 12 to the lower surface 13a of the ring groove 13. In this arrangement, the lower surface 23a of the lower leg portion 23 moves outward on the lower surface 13a of the ring groove 13 when a compression pressure acts on the piston body 10. Thus, a space is formed between the entire inner circumferential surface of the piston ring 20 and the periphery of the top land portion 12. This space has a labyrinth effect, and makes it difficult to transfer oil that moves from the second land portion 16 to the back of the piston ring 20 via the lower side face of the piston ring 20, to the combustion chamber. Thus, the effect of reducing oil consumption can be achieved.

The piston assembly 1A of the present embodiment operates in the same manner as that of the above embodiment and has the same effects as those achieved in the above embodiment.
Fig. 6 shows a piston assembly 1 B for internal-combustion engine according to still another embodiment of the present invention.
The piston assembly 1 B is different from the above piston assemblies 1 and 1 A of the above embodiments in the following points. An upper periphery 24 of the piston ring 20 has a BF (barrel face) shape and projects outward by about 0.5 mm. A lower periphery 25 of the piston ring 20 is formed as a tapered contact face that projects outward by about 0.5 mm. In the present embodiment, the piston ring 20 hardly comes into contact with the cylinder at an edge because the upper periphery 24 of the piston ring 20 has a barrel face shape. Thus, the piston assembly 1 B of the present embodiment is effective in preventing scuff.

The piston assembly 1 B also has an advantage that an excellent effect of scraping oil can be achieved during a moving-down stroke of the piston body 10, because the lower periphery 25 is formed as a tapered contact face.
In the piston assembly 1B, a single piston ring has different shapes in the upper part and the lower part. Thus, as compared with the piston ring 20 shown in Fig. 2, the effective contact area can be made smaller and a face pressure under the same tension can be increased. When the face pressure is large, the following capability of the periphery of the piston ring is better and the oil consumption is improved.

Alternatively, the lower periphery 25 may be formed as a straight contact face.
The piston assembly 1 B of the present embodiment operates in the same manner as those of the above embodiments and can achieve the same effects as those achieved in the above embodiments.

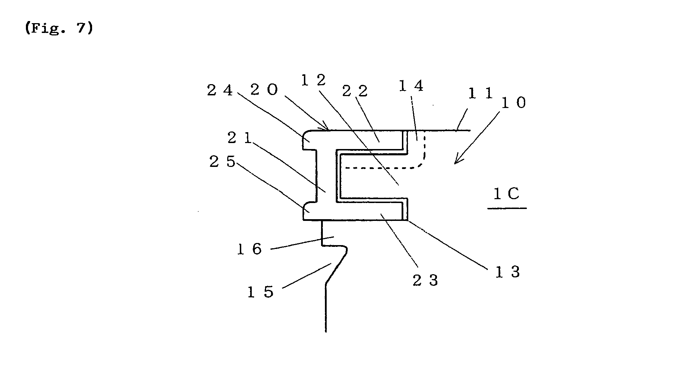

Fig. 7 shows a piston assembly 1C for internal-combustion engine according to further another embodiment of the present invention.
The piston assembly 1C is different from the piston assemblies 1, 1A, and 1B of the above embodiments in that both the upper periphery 24 and the lower periphery 25 of the piston ring 20 are formed as contact faces of a half-barrel shape.

The piston assembly 1C can also achieve the same effects as those achieved by the piston assembly 1 B of the embodiment of Fig. 6.
The piston assembly 1C operates in the same manner as those of the piston assemblies of the above embodiments.

## Claims

1. A piston assembly for an internal-combustion engine comprising:
a piston body including a top land portion and a ring groove formed on its periphery; and
a piston ring having a U-shaped cross section, the piston ring including an upper leg portion, a lower leg portion, and a base portion connecting the upper and lower leg portions, the piston ring being attached to the top land portion of the piston body, wherein
an axial length from a boundary of the base portion of the piston ring and the upper leg portion to a lower surface of the lower leg portion is set to be larger than an axial length from an upper surface of the top land portion of the piston body to a lower surface of the ring groove into which the lower leg portion of the piston ring is fitted.

2. A piston assembly for an internal-combustion engine comprising:
a piston body including a top land portion and a ring groove formed on its periphery; and
a piston ring having a U-shaped cross section, the piston ring including an upper leg portion, a lower leg portion, and a base portion connecting the upper and lower leg portions, the piston ring being attached to the top land portion of the piston body, wherein
at least one axial groove is provided on a thrust side of the top land portion of the piston body.

3. A piston assembly for an internal-combustion engine comprising:
a piston body including a top land portion and a ring groove formed on its periphery; and
a piston ring having a U-shaped cross section, the piston ring including an upper leg portion, a lower leg portion, and a base portion connecting the upper and lower leg portions, the piston ring being attached to the top land portion of the piston body, wherein
the piston body further includes a second land portion in which a V-shaped annular groove is formed.

4. The piston assembly for an internal-combustion engine according to any one of claims 1 to 3, wherein
the piston ring has an upper periphery of a BF (barrel face) shape and a lower periphery formed as a straight or tapered contact face.
